(19)

**Europäisches Patentamt**
**European Patent Office**
**Office européen des brevets**

(11) **EP 1 838 972 B1**

(12) **EUROPÄISCHE PATENTSCHRIFT**

(45) Veröffentlichungstag und Bekanntmachung des Hinweises auf die Patenterteilung:
**24.02.2010 Patentblatt 2010/08**

(21) Anmeldenummer: **05815302.4**

(22) Anmeldetag: **13.12.2005**

(51) Int Cl.:
*F16D 41/07* *(2006.01)*      *F16D 41/06* *(2006.01)*

(86) Internationale Anmeldenummer:
**PCT/EP2005/013360**

(87) Internationale Veröffentlichungsnummer:
**WO 2006/076950 (27.07.2006 Gazette 2006/30)**

(54) **KLEMMKÖRPER**

CLAMPING BODY

CORPS DE SERRAGE

(84) Benannte Vertragsstaaten:
**DE FR GB IT**

(30) Priorität: **18.01.2005 DE 102005002252**

(43) Veröffentlichungstag der Anmeldung:
**03.10.2007 Patentblatt 2007/40**

(73) Patentinhaber: **Schaeffler KG**
**91074 Herzogenaurach (DE)**

(72) Erfinder:
• **SMETANA, Tomas**
**91056 Erlangen (DE)**

• **STRAUB, Frank**
**97618 Hohenroth (DE)**
• **ALTMANN, Frieder**
**96178 Pommersfelden (DE)**
• **PLOETZ, Volker**
**91074 Herzogenaurach (DE)**

(56) Entgegenhaltungen:
DE-A1- 1 450 158      DE-A1- 3 741 518
US-A- 3 326 342      US-A- 3 547 239
US-A- 5 518 094      US-A1- 2004 003 976

EP 1 838 972 B1

**Beschreibung**

**Gebiet der Erfindung**

Die Erfindung betrifft einen Klemmkörper für einen Klemmkörperfreilauf. Ein solcher Klemmkörper für eine Freilaufkupplung ist beispielsweise aus der US 2004/0003976 A1 bekannt.

**Hintergrund der Erfindung**

Der aus der US 2004/0003976 A1 bekannte, zur Anordnung zwischen einem Innenring und einem Außenring einer Freilaufkupplung vorgesehene Klemmkörper weist aktive Oberflächen, das heißt Klemmflächen, auf, die eine logarithmische Spirale beschreiben. Beim Übergang zwischen einer freilaufenden und einer klemmenden Position des Klemmkörpers kann damit der Klemmwinkel konstant gehalten werden.

Klemmkörperfreiläufe werden als Einwegkupplungen beispielsweise in Automatikgetrieben oder in Förderbändern eingesetzt. Sie übertragen Torsionsbelastungen lediglich in eine Richtung, die so genannte Sperrrichtung. In die andere Richtung, die Leerlaufrichtung, bewegen sich Klemmkörperfreiläufe frei. Um eine solche Wirkung zu erreichen, bestehen Klemmkörperfreiläufe aus einem inneren und einem äußeren Laufring, welche konzentrisch zueinander sind und damit durch ihren Abstand eine Spaltgröße H definieren, und Klemmkörpern, die zwischen den Laufringen kippbar angeordnet sind.

Die Klemmkörper weisen an ihren Klemmflächen eine konvexe Klemmfläche auf. Diese sind derart gestaltet, dass eine Änderung des Kippwinkels eine Änderung der Klemmkörperhöhe in radialer Richtung bewirkt. Zur Einleitung eines Einkuppelvorgangs werden die Klemmkörper beispielsweise durch Federn an die Klemmbahnen, die durch die Laufringe vorgegeben sind, gedrückt. Die Richtung der Kippbewegung hängt von der Relativbewegung der beiden Laufringe voneinander ab. So führt die Relativbewegung in der einen Richtung zu einer Kippbewegung, die die radiale Klemmkörperhöhe und damit die Reibung verringert (Leerlaufrichtung), und in der anderen Richtung zu einer Kippbewegung, die die radiale Klemmkörperhöhe erhöht, damit einen Kraftschluss herstellt und Drehmomente übertragen kann.

Bei geeignet gewähltem Massenschwerpunkt wächst bei einer bestimmten relativen Winkelgeschwindigkeit in der Leerlaufrichtung die auf die Klemmkörper wirkende Zentrifugalkraft aufgrund der durch die asymmetrische Geometrie geschaffenen Trägheitsmomente auf eine Größe, die die Klemmkörper dazu veranlasst, so um eine Achse zu schwenken, dass zwischen den Klemmkörpern und dem äußeren Laufring ein Zwischenraum entsteht. Damit wird ein verschleißfreier Leerlaufbetrieb sichergestellt. Ein derartiger Klemmkörperfreilauf ist beispielsweise in der US-A 2,824,635 offenbart.

Je nach Einsatzprofil werden dabei an die Klemmkörper unterschiedliche Anforderungen gestellt. Sie sollen eine geringe Masse aufweisen, damit sie ein kleines Massenträgheitsmoment aufweisen, und gleichzeitig eine hohe Steifigkeit besitzen. Vorteilhaft ist eine lange Klemmkontur, um möglichst große Toleranzen einer Welle und einer Bohrung abdecken zu können, bei gleichzeitig niedrigem Spannungsniveau. Weiterhin sollen Klemmkörper eine hohe Überkippbelastung besitzen, sowie eine große Bewegungsfreiheit im Käfig haben.

Um die Steifigkeit zu erhöhen, ist beispielsweise in der DE 1 450 158 vorgeschlagen, die Klemmkörper so zu konstruieren, dass ihre sich am äußeren bzw. inneren Laufring abstützenden, an sich spiegelbildlich zueinander verlaufenden Kurvenstücke in seitenvertauschter Weise aus einem Kreisbogenstück mit anschließendem logarithmischen Kurvenstück ergeben. Dabei machen die Kreisbogenstücke in 3/10 bis 5/10 der gesamten Kurvenstücke aus. Die Kreisbogenstücke dienen im ersten Teil dem Freilaufzustand, der übrige Teil und die logarithmischen Kurvenstücke bewirken die Sperrung. Dabei ist das logarithmische Kurvenstück so ausgelegt, dass der Winkel zwischen der Normalen im Berührungspunkt und dem Radiusvektor über das ganze logarithmische Kurvenstück konstant ist, so dass beim Abrollen des Klemmkörpers die Klemmwinkel gleich bleiben. Kippbewegungen der Klemmkörper infolge Unrundheit eines Laufringes haben damit einen geringen Einfluss auf den Klemmwinkel.

Der in der DE 1 450 158 vorgestellte Klemmkörper weist jedoch eine hohe Masse auf. Weiterhin ist für den Freilaufbereich ein Kreisbogenanteil notwendig, in diesem Bereich verändert sich der Klemmwinkel. Ferner ist er für ein bestimmtes Paar eines inneren und äußeren Laufrings konzipiert. Ist bei einer anderen Anwendung die Spaltgröße H anders, genügt es aufgrund der besonderen geometrischen Form des Klemmkörpers nicht, ihn einfach zu skalieren, weil die Steifigkeit von seiner Lage, also seiner Ausrichtung in radialer Richtung, abhängt.

**Aufgabe der Erfindung**

Der Erfindung liegt daher die Aufgabe zugrunde, einen Klemmkörper zu schaffen, der eine geringe Masse aufweist, gleichzeitig eine hohe und gleich bleibende Steifigkeit besitzt, und der sich durch einfaches Skalieren einfach an verschiedene Laufringpaare anpassen lässt.

**EP 1 838 972 B1**

**Zusammenfassung der Erfindung**

Die Aufgabe der Erfindung wird durch die kennzeichnenden Merkmale des Patentanspruchs 1 gelöst, indem die gesamte äußere und innere Klemmkurve des Klemmkörpers jeweils einen Teilabschnitt derselben logarithmischen Spirale bilden.

Das Klemmkörperprofil setzt sich aus der äußeren und inneren Klemmkurve und aus den Seitenkurven zusammen. Die Klemmkurven ergeben sich dabei aus einer logarithmischen Spirale, und die Seitenkurven schließen mit tangentialen Übergängen an diese an. Dadurch dass die gesamte äußere und innere Klemmkurve auf einer logarithmischen Spirale liegen, ist der Klemmwinkel $\alpha$ konstant. Er ist unabhängig von der Belastung und bleibt auch bei einer Veränderung der Spaltgröße H gleich. Der erfindungsgemäße Klemmkörper gleicht damit nicht nur Unrundheiten eines zylindrischen Laufrings aus, was die Lebensdauer erhöht. Er eignet sich zweitens auch besonders vorteilhaft für exzentrische Wellen, da auch dann die Lastverteilung in Umfangsrichtung bei dem Klemmkörperfreilauf konstant ist. Schließlich ist er aufgrund seiner Topologie skalierbar, braucht also bei Anwendungen, die verschiedene Spaltgrößen erfordern, nur durch eine Ähnlichkeitsabbildung auf die passende Größe gestreckt werden; eine Veränderung seiner Form ist nicht erforderlich.

Dass die Klemmkurven des erfindungsgemäßen Klemmkörpers auf derselben logarithmischen Spirale liegen, bedeutet, dass die Parameter der der logarithmischen Spirale zugrunde liegenden Gleichung

$$r(\varphi) = r_0 \exp(\varphi \cot(\frac{\pi}{2} - \alpha))$$

für die äußere und die innere Klemmkurve gleich sind, wobei $\alpha$ den Klemmwinkel des Klemmkörpers, zwischen zwei parallelen Ebenen gemessen, bezeichnet und cot für die Kotangensfunktion steht. Dabei gilt für $r_0$ den Ortsvektor an der Stelle $\varphi = 0$ :

$$r_0 = \frac{H}{\cos\alpha} \left[ 1 + \exp(\pi \cot(\frac{\pi}{2} - \alpha)) \right]^{-1}.$$

Im Allgemeinen ist die Hertzsche Pressung auf der inneren Klemmkurve wegen des ungünstigeren Krümmungsverhältnisses größer als die auf der äußeren Klemmkurve. Da die Lebensdauer eines Klemmkörperfreilaufs hauptsächlich von der Pittingsbildung auf der inneren Klemmkurve der Klemmkörper abhängt, ist die Lebensdauer in der Regel durch diesen Effekt begrenzt. Bei den erfindungsgemäßen Klemmkörpern ist die Hertzsche Pressung auf der inneren Klemmkurve genauso groß wie auf der äußeren Klemmkurve. Dadurch ist die Lebensdauer gesteigert.

In besonders vorteilhafter Weise sind die überstrichenen Winkel auf der logarithmischen Spirale etwa gleich groß und betragen 57°-59°. Es ist dabei besonders zu beachten, dass die Kontur der logarithmischen Spirale auch noch an den seitlichen Enden eingehalten wird und nicht bereits eine vorzeitiges Abrunden in Richtung der Seitenkurven erfolgt, da dann die Funktion des Klemmkörpers beeinträchtigt wird. Aus Fertigungsgründen ist es daher sinnvoll, den Bereich des überstrichenen Winkels etwas größer als erforderlich zu wählen, damit Bearbeitungsungenauigkeiten nicht zu einer unerwünschten Einschränkung der Nutzung führen. Dabei hat es sich herausgestellt, dass eine Verlängerung der inneren und äußeren Klemmkurve auf der logarithmischen Spirale um bis zu 3 Grad in jede Richtung dieses Problem vermeidet, der überstrichene Winkel also jeweils 60°-63° beträgt.

Die zweite Seitenkurve setzt sich aus zwei Kreisbögen mit einem tangentialen Übergang und die erste Seitenkurve aus einem Kreisbogen und einem geraden Teilstück mit einem tangentialen Übergang so zusammen, dass der Klemmkörper drehzahlabhebend ist. Dazu ist der Schwerpunkt des Klemmkörpers stets nahe bei, aber nicht auf der Verbindungsgeraden, die durch die Kontaktpunkte des Klemmkörpers mit dem inneren Laufring und die mit dem äußeren Laufring definiert wird.

Das gerade Teilstück der ersten Seitenkurve erfüllt mehrere Aufgaben: Zum einen kann in besonders vorteilhafter Weise auf der Geraden im Bereich der Engstelle des Klemmkörpers eine Feder, beispielsweise eine Federnase einer Bandfeder, anliegen. Dann liegt der beispielsweise in einem Käfig angeordnete Klemmkörper bei Überschreiten einer gewissen Drehzahlgrenze mit dem geraden Teilstück flächig an seinem Käfig an. Die durch die steigende Drehzahl immer größer werdende Fliehkraft kann dadurch über den Käfig auf den Außenring abgeleitet werden, und die Feder wird vor einer Überbeanspruchung geschützt. Weiterhin vereinfacht das gerade Teilstück in Verbindung mit der ersten Seitenkurve die Montage, da es bei der maschinellen Befüllung eines Klemmkörperfreilaufs von Vorteil ist, die Seitenkurven möglichst unterschiedlich auszubilden, um eine leichte Seitenerkennung zu gewährleisten und damit eine falsche

3

Einbauposition zu vermeiden.

Alle den Klemmkörper beschreibenden Größen lassen sich als ein gebrochenes Vielfaches einer durch die Anwendung vorgegebenen Spaltgröße H zwischen innerem Laufring und äußerem Laufring parametrisieren. Dadurch kann der derartig ausgebildete Klemmkörper auf eine beliebige Größe skaliert werden und damit für vielerlei Abstände eines inneren Laufrings und äußeren Laufrings eingesetzt werden. Bei Klemmkörpern im Stand der Technik ist das nicht der Fall, da bei der Abstandsvergrößerung sich auch die Krümmungsverhältnisse im Freilauf ändern und ein einfach gestreckter Klemmkörper dann anders belastet wird. Beim erfindungsgemäßen Klemmkörper hingegen ist die Steifigkeit nahezu konstant. Es entfällt eine aufwändige Neuentwicklung einer geeigneten Klemmkörperkontur.

Der erfindungsgemäße Klemmkörper nach Anspruch 6 ist masseoptimiert und weist außerdem geringe Kerbspannungen im Bereich seines geringsten Durchmessers .auf. Aufgrund der speziellen Massenverteilung in Verbindung mit der Außenkontur der logarithmischen Spirale verläuft die Verdrehwinkelkennlinie des Klemmkörperfreilaufs mit dem optimierten Klemmkörper bis zum Überkippen linear. Dadurch erhöht sich die Überkippbelastung des Klemmkörperfreilaufs beim Kleinstspalt erheblich. Ist eine derartig hohe Überkipplast bei gleichzeitig niedrigen Kerbspannungen nicht erforderlich, ist es möglich, die Klemmkörperfreiläufe bei gleicher Belastbarkeit mit weniger Klemmkörpern zu bestücken, was eine Gewichts- und Kosteneinsparung zur Folge hat.

## Kurze Beschreibung der Zeichnung

Zur weiteren Erläuterung der Erfindung wird auf die Zeichnungen verwiesen, in denen Ausführungsbeispiele der Erfindung vereinfacht dargestellt sind. Es zeigen:

Figur 1     einen Ausschnitt aus einer Seitenansicht eines Klemmkörperfrei- laufs nach dem Stand der Technik,

Figur 2     einen Querschnitt eines erfindungsgemäßen Klemmkörpers,

Figur 3     einen Querschnitt des erfindungsgemäßen Klemmkörpers aus Figur 2 mit detaillierten Konstruktionsangaben.

## Detaillierte Beschreibung der Zeichnungen

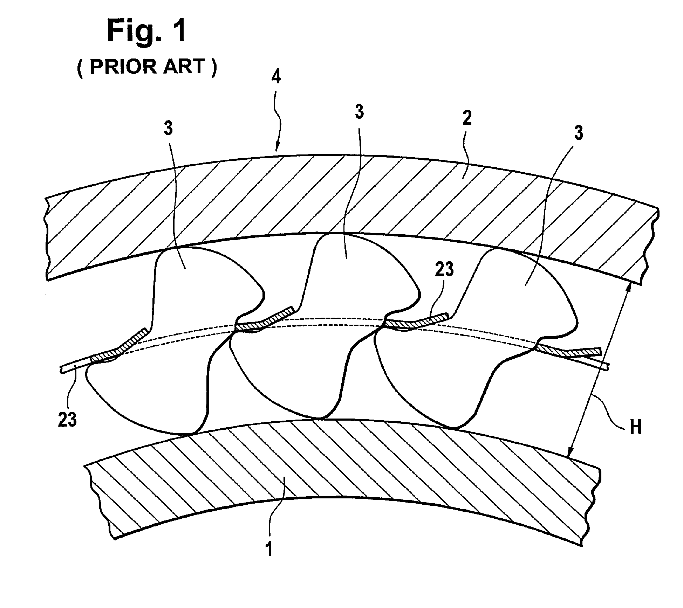

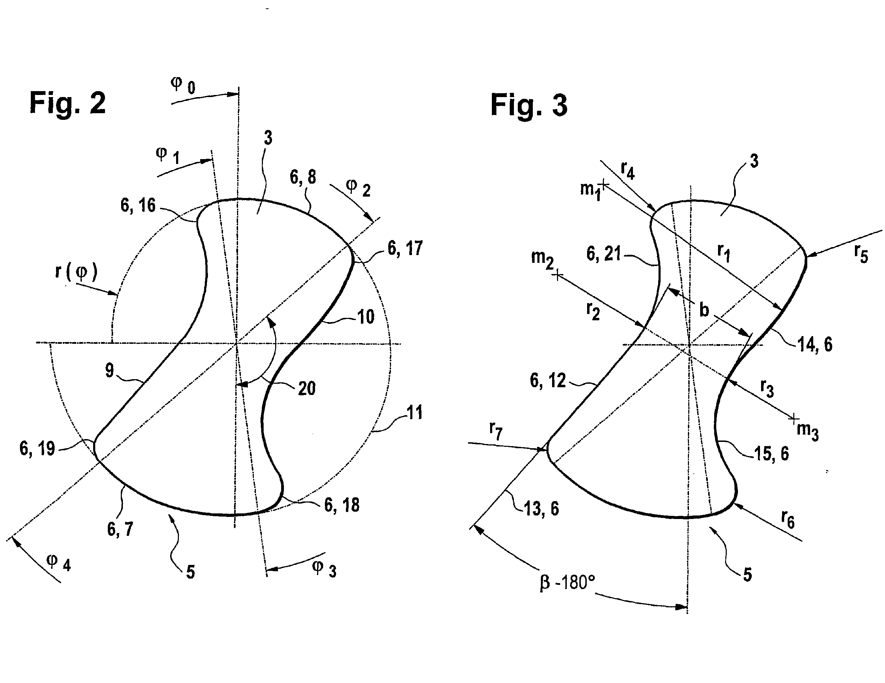

In der Figur 1 ist, soweit im Einzelnen dargestellt, mit 1 eine Innenlaufbahn, mit 2 eine Außenlaufbahn und mit 23 ein zwischen ihnen angeordnetes Federelement bezeichnet, wobei zwischen Innenlaufbahn 1 und Außenlaufbahn 2 Klemmkörper 3 angeordnet sind. Zusammen bilden diese die wesentliche Funktionseinheit eines Klemmkörperfreilaufs 4. Figuren 2 und 3 zeigen einen Querschnitt eines Profils 5 eines erfindungsgemäßen Klemmkörpers 3, dessen Profilabschnitte 6 aus einer inneren Klemmkurve 7, einer äußeren Klemmkurve 8, einer ersten Seitenkurve 9, einer zweiten Seitenkurve 10 und aus Verbindungskreisabschnitten 16, 17, 18, 19 gebildet werden. Die innere Klemmkurve 7 und die äußere Klemmkurve 8 besitzen die Kontur einer logarithmischen Spirale 11. Die Kontur der ersten Seitenkurve 9 wird durch ein gerades Teilstück 12 auf einer Trägergeraden 13 mit einem anschließenden nach innen gewölbten Teilkreis 21 beschrieben, und die zweite Seitenkurve 10 besteht aus zwei aneinander anschließenden entgegengesetzt gewölbten Kreissegmenten 15, 16. Die innere und äußere Klemmkurve 7, 8 sind dabei mit der ersten und zweiten Seitenkurve 9, 10 durch Verbindungskreisabschnitte 16, 17, 18, 19 verbunden. Dabei ist die exakte Ausbildung der Verbindungskreisabschnitte 16, 17, 18, 19 von untergeordneter Bedeutung. Sie können auch anderweitig ausgebildet sein, solange sie die Klemmkurven und Seitenkurven tangential verbinden, wobei sie keine Kanten aufweisen sollten.

In vorteilhafter Ausgestaltung gehen die Verbindungskreisabschnitte 16, 17, 18, 19 tangential in die Klemmkurven 7, 8 und Seitenkurven 9, 10 über. Für eine optimale Steifigkeit überstreicht der Radiusvektor im Falle der inneren und äußeren Klemmkurve 7, 8 einen Winkel von 58°. Aufgrund des ungünstigeren Krümmungsverhältnisses der Innenlaufbahn 1 beträgt der Winkelabstand 20 zwischen äußerer Klemmkurve 8 des Klemmkörpers 3 und seiner inneren Klemmkurve 7, der die zweite Seitenkurve 10 überstreicht, 110 bis 118 Grad. Eine optimale Gewichtsreduktion des Klemmkörpers 3 bei gleichzeitig hoher Steifigkeit wird erreicht, wenn dieser tailliert ausgebildet ist und seine minimale Breite b etwa 31 % der Spaltgröße H beträgt.

Die Eigenschaften des Klemmkörpers 3 hängen stark von seinem exakten Profil ab. Figur 3 zeigt einen besonders vorteilhaften Klemmkörper 3 mit mehreren Profilabschnitten 6. Die folgenden Winkelangaben beziehen sich auf den Parameter $\varphi$ der logarithmischen Spirale 11 und sind in mathematisch negativer Richtung zu verstehen (im Uhrzeigersinn). Die Abszisse wird durch den Radiusvektor bei $\varphi = 0°$ gebildet, die Ordinate durch den Radiusvektor bei $\varphi = 90°$. Der Klemmkörper 3 wird bei gegebener Spaltgröße H und Parametrisierung der logarithmischen Spirale 11 durch die vorgenannten Formeln durch die folgenden Eigenschaften bestimmt:

- Jeder Profilabschnitt 6 geht tangential in den nächsten Profilabschnitt 6 über.

- Die logarithmische Spirale (11) ist durch die Parameter

$$r(\varphi) = r_0 \exp(\varphi \cot(\frac{\pi}{2} - \alpha)) \quad \text{und} \quad r_0 = \frac{H}{\cos \alpha}\left[1 + \exp(\pi \cot(\frac{\pi}{2} - \alpha))\right]^{-1}$$ definiert, wobei r den Radius und $\alpha$ den Klemmwinkel des Klemmkörpers, zwischen zwei parallelen Ebenen gemessen, bezeichnet.

- Die Abszisse wird durch den Radiusvektor bei $\varphi$ = 0°, die Ordinate durch den Radiusvektor bei $\varphi_0$ = 90° gebildet.
- Die äußere Klemmkurve (8) erstreckt sich von $\varphi_1$ = 82° bis $\varphi_2$ = 133°.
- Die innere Klemmkurve (7) erstreckt sich von $\varphi_3$ = 261° bis $\varphi_4$ = 320°.
- Das erste Kreissegment (14) der zweiten Seitenkurve (10) liegt auf dem Kreis mit dem Mittelpunkt $m_1$ mit den Koordinaten (-0,3 H ; +0,5 H) und dem Radius $r_1$ = 0,7$H$.
- Der Teilkreis (21) liegt auf einem Kreis mit dem Mittelpunkt $m_2$ mit den Koordinaten (-0,4 H ; +0,2 H) und dem Radius $r_2$ = 0,3$H$ .
- Das zweite Kreissegment (15) der zweiten Seitenkurve (10) liegt auf einem Kreis, dessen Mittelpunkt $m_3$ um 0,9 H vom Mittelpunkt des Teilkreis' (21) und 0,3 H von der Ordinate entfernt ist, zwischen der äußeren und inneren Klemmkurve. Dessen Radius beträgt $r_3$ = 0,3$H$.
- Das gerade Teilstück (12) der ersten Seitenkurve (10) erstreckt sich vom Schnittpunkt des Teilkreis' (21) mit der Ordinate unter einem Winkel von $\beta$=180°+42° in Richtung der der inneren Klemmkurve (7).
- Der Verbindungskreisabschnitt (16), der den Teilkreis (21) mit der äußeren Klemmkurve (8) verbindet, besitzt einen Radius von $r_4$ < 0,1$H$.
- Der Verbindungskreisabschnitt (17), der die äußere Klemmkurve (8) mit dem ersten Kreissegment (14) verbindet, besitzt einen Radius von $r_5$ < 0,1$H$.
- Der Verbindungskreisabschnitt (18), der das zweite Kreissegment (15) mit der inneren Klemmkurve (7) verbindet, besitzt einen Radius von $r_6$ < 0,1$H$.
- Der Verbindungskreisabschnitt (19), der die innere Klemmkurve (7) mit dem geraden Teilstück (12) verbindet, besitzt einen Radius von $r_7$ < 0,1$H$.

Ein Klemmkörper der folgenden Ausbildung hat sich als besonders vorteilhaft herausgestellt:

- Jeder Profilabschnitt 6 geht tangential in den nächsten Profilabschnitt 6 über.

- Die logarithmische Spirale (11) ist durch die Parameter $$r(\varphi) = r_0 \exp(\varphi \cot(\frac{\pi}{2} - \alpha))$$ und

$$r_0 = \frac{H}{\cos \alpha}\left[1 + \exp(\pi \cot(\frac{\pi}{2} - \alpha))\right]^{-1}$$ definiert, wobei r den Radius und $\alpha$ den Klemmwinkel des Klemmkörpers, zwischen zwei parallelen Ebenen gemessen, bezeichnet.

- Die Abszisse wird durch den Radiusvektor bei $\varphi$= 0° , die Ordinate durch den Radiusvektor bei $\varphi_0$ = 90° gebildet.

- Die äußere Klemmkurve (8) erstreckt sich von $\varphi_1$ = 80° bis $\varphi_2$ = 141°.

- Die innere Klemmkurve (7) erstreckt sich von $\varphi_3$ = 259° bis $\varphi_4$ = 320°.

- Das erste Kreissegment (14) der zweiten Seitenkurve (10) liegt auf dem Kreis mit dem Mittelpunkt $m_1$ mit den Koordinaten (-0,286 H ; +0,508 H) und dem Radius $r_1$ = 0,715$H$.

- Der Teilkreis (21) liegt auf einem Kreis mit dem Mittelpunkt $m_2$ mit den Koordinaten (-0,429 H ; +0,222 H) und dem Radius $r_2$ = 0,334$H$ .

- Das zweite Kreissegment (15) der zweiten Seitenkurve (10) liegt auf einem Kreis, dessen Mittelpunkt $m_3$ um 0,929 H vom Mittelpunkt des Teilkreis' (21) und 0,373 H von der Ordinate entfernt ist, zwischen der äußeren und inneren Klemmkurve. Dessen Radius beträgt $r_3$ = 0,286$H$.

- Das gerade Teilstück (12) der ersten Seitenkurve (10) erstreckt sich vom Schnittpunkt des Teilkreis' (21) mit der Ordinate unter einem Winkel von $\beta$=180°+42° in Richtung der der inneren Klemmkurve (7).

- Der Verbindungskreisabschnitt (16), der den Teilkreis (21) mit der äußeren Klemmkurve (8) verbindet, besitzt einen Radius von $r_4$ = 0,064H.

- Der Verbindungskreisabschnitt (17), der die äußere Klemmkurve (8) mit dem ersten Kreissegment (14) verbindet, besitzt einen Radius von $r_5$ = 0,048H .

- Der Verbindungskreisabschnitt (18), der das zweite Kreissegment (15) mit der inneren Klemmkurve (7) verbindet, besitzt einen Radius von $r_6$ = 0,079H .

- Der Verbindungskreisabschnitt (19), der die innere Klemmkurve (7) mit dem geraden Teilstück (12) verbindet, besitzt einen Radius von $r_7$= 0,056H.

Der in Figur 3 vorgestellte Klemmkörper 3 weist in einem weiten Bereich eine lineare Verdrehwinkelkennlinie auf, die das Torsionsmoment in Abhängigkeit von dem Verdrehwinkel beschreibt. Die Steigung dieser Kennlinie ist ein Maß für die Steifigkeit des Klemmkörpers 3. Durch den linearen Zusammenhang ist also die Steifigkeit unabhängig vom Verdrehwinkel. Insbesondere gilt dies auch noch in dem dem Überkippen des Klemmkörpers 3 nahe gelegenen Bereich. Zudem liegen die übertragbaren Torsionsmomente auf einem hohen Niveau.

Ein weiterer Vorteil ist, dass die Kerbspannungen des in Figur 3 und 4 dargestellten Klemmkörpers 3 niedrig sind und insbesondere bei Überlast an beiden Seitenkurven 9,10 nicht sehr stark zunehmen und zudem fast gleich groß sind. Die gleichen Kerbspannungen und die lineare Verdrehwinkelkennlinie haben zur Folge, dass ein Klemmkörperfreilauf 4 mit den erfindungsgemäßen Klemmkörpern 3 durch deren gleich bleibende Eigenschaften auch in Grenzbereichen bei gleicher Belastbarkeit haltbarer und berechenbarer ist und/oder weniger bestückt werden muss, was Masse- und auch Kosteneinsparungen zulässt.

**Bezugszahlenliste**

| 1 | Innenlaufbahn |
|---|---|
| 2 | Außenlaufbahn |
| 3 | Klemmkörper |
| 4 | Klemmkörperfreilauf |
| 5 | Profil |
| 6 | Profilabschnitt |
| 7 | innere Klemmkurve |
| 8 | äußere Klemmkurve |
| 9 | erste Seitenkurve |
| 10 | zweite Seitenkurve |
| 11 | logarithmische Spirale |
| 12 | gerades Teilstück |
| 13 | Trägergerade |
| 14 | erstes Kreissegment |
| 15 | zweites Kreissegment |
| 16 | erster Verbindungskreisabschnitt |
| 17 | zweiter Verbindungskreisabschnitt |
| 18 | dritter Verbindungskreisabschnitt |
| 19 | vierter Verbindungskreisabschnitt |
| 20 | Winkelabstand |
| 21 | Teilkreis |
| 22 | (nicht belegt) |
| 23 | Federelement |

| H | Spaltgröße |
|---|---|
| b | minimale Breite |

**Patentansprüche**

1. Klemmkörper für einen Klemmkörperfreilauf, der eine Spalthöhe H zwischen einem inneren Laufring und einem äußeren Laufring aufweist, mit einem Profil aus mehreren Profilabschnitten, wobei der Klemmkörper mindestens die Profilabschnitte einer inneren Klemmkurve, einer äußeren Klemmkurve einer ersten und einer zweiten Seitenkurve aufweist, wobei die gesamte äußere Klemmkurve (8) und innere Klemmkurve (7) einen Teilabschnitt derselben logarithmischen Spirale (11) bilden, **dadurch gekennzeichnet, dass** die erste Seitenkurve (9) durch ein gerades Teilstück (12) mit einem an dieses anschließenden, nach innen gewölbten Teilkreis (21) bestimmt ist und dass die zweite Seitenkurve (10) aus zwei aneinander anschließenden, entgegengesetzt gewölbten Kreissegmenten (14, 15) besteht.

2. Klemmkörper nach Anspruch 1, **dadurch gekennzeichnet, dass** die überstrichenen Winkel der äußeren (8) Klemmkurve und inneren Klemmkurve (7) jeweils 57° bis 63° betragen.

3. Klemmkörper nach einem der vorhergehenden Ansprüche, **dadurch gekennzeichnet, dass** das Profil (5) derart ausgebildet ist, dass die Klemmkurven (7, 8) und die Seitenkurven (9, 10) jeweils als durch Verbindungskreisabschnitte (16, 17, 18, 19) ausgebildete Profilabschnitte (6) verbunden sind.

4. Klemmkörper nach einem der vorhergehenden Ansprüche, **dadurch gekennzeichnet, dass** jeder Profilabschnitt (6) tangential an den nächsten Profilabschnitt (6) angrenzt.

5. Klemmkörper nach Anspruch 4, **dadurch gekennzeichnet, dass**

   - die logarithmische Spirale (11) durch Parameter $r(\varphi) = r_0 \exp(\varphi \cot(\frac{\pi}{2} - \alpha))$ und

   $$r_0 = \frac{H}{\cos\alpha}\left[1 + \exp(\pi \cot(\frac{\pi}{2} - \alpha))\right]^{-1}$$ bestimmt ist, wo bei r den Radius und $\alpha$ den Klemmwinkel des

   Klemmkörpers, zwischen zwei parallelen Ebenen gemessen, bezeichnet,
   - die Abszisse durch den Radiusvektor bei $\varphi = 0°$, die Ordinate durch den Radiusvektor bei $\varphi_0 = 90°$ gebildet wird,
   - die äußere Klemmkurve (8) sich von $\varphi_1 = 82°$ bis $\varphi_2 = 133°$ erstreckt,
   - die innere Klemmkurve (7) sich von $\varphi_3 = 261°$ bis $\varphi_4 = 320°$ erstreckt,
   - das erste Kreissegment (14) der zweiten Seitenkurve (10) auf dem Kreis mit dem Mittelpunkt $m_1$ mit den Koordinaten (-0,3 H ; +0,5 H) und dem Radius $r_1 = 0,7H$ liegt,
   - der Teilkreis (21) auf einem Kreis mit dem Mittelpunkt $m_2$ mit den Koordinaten (-0,4 H ; +0,2 H) und dem Radius $r_2 = 0,3H$ liegt,
   - das zweite Kreissegment (15) der zweiten Seitenkunre (10) auf einem Kreis, dessen Mittelpunkt $m_3$ um 0,9 H vom Mittelpunkt des Teilkreis' (21) und 0,4 H von der Ordinate entfernt und zwischen der äußeren und inneren Klemmkurve liegt und dessen Radius $r_3 = 0,3H$ beträgt,
   - das gerade Teilstück (12) der ersten Seitenkurve (10) sich vom Schnittpunkt des Teilkreis' (21) mit der Ordinate unter einem Winkel von $\beta = 180° + 42°$ in Richtung der der inneren Klemmkurve (7) erstreckt,
   - der Verbindungskreisabschnitt (16), der den Teilkreis (21) mit der äußeren Klemmkurve (8) verbindet, einen Radius von $r_4 =< 0,1H$ besitzt,
   - der Verbindungskreisabschnitt (17), der die äußere Klemmkurve (8) mit dem ersten Kreissegment (14) verbindet, einen Radius von $r_5 =< 0,1H$ besitzt,
   - der Verbindungskreisabschnitt (18), der das zweite Kreissegment (15) mit der inneren Klemmkurve (7) verbindet, einen Radius von $r_6 < 0,1H$ besitzt,
   - der Verbindungskreisabschnitt (19), der die innere Klemmkurve (7) mit dem geraden Teilstück (12) verbindet, einen Radius von $r_7 < 0,1H$ besitzt.

6. Klemmkörper nach Anspruch 4, **dadurch gekennzeichnet, dass**

   - die logarithmische Spirale (11) durch Parameter $r(\varphi) = r_0 \exp(\varphi \cot(\frac{\pi}{2} - \alpha))$ und

$$r_0 = \frac{H}{\cos\alpha}\left[1 + \exp(\pi\cot(\frac{\pi}{2} - \alpha))\right]^{-1}$$ bestimmt ist, wo bei r den Radius und $\alpha$ den Klemmwinkel des

Klemmkörpers, zwischen zwei parallelen Ebenen gemessen, bezeichnet,
- die Abszisse durch den Radiusvektor bei $\varphi = 0°$, die Ordinate durch den Radiusvektor bei $\varphi_0 = 90°$ gebildet wird,
- die äußere Klemmkurve (8) sich von $\varphi_1 = 80°$ bis $\varphi_2 = 142°$ erstreckt,
- die innere Klemmkurve (7) sich von $\varphi_3 = 259°$ bis $\varphi_4 = 320°$ erstreckt,
- das erste Kreissegment (14) der zweiten Seitenkurve (10) auf dem Kreis mit dem Mittelpunkt $m_1$ mit den Koordinaten (-0,286 H ; +0,508 H) und dem Radius $r_1 = 0,715H$ liegt,
- der Teilkreis (21) auf einem Kreis mit dem Mittelpunkt $m_2$ mit den Koordinaten (-0,429 H ; +0,222 H) und dem Radius $r_2 = 0,335H$ liegt,
- das zweite Kreissegment (15) der zweiten Seitenkurve (10) auf einem Kreis, dessen Mittelpunkt $m_3$ um 0,929 H vom Mittelpunkt des Teilkreis' (21) und 0,373 H von der Ordinate entfernt und zwischen der äußeren und inneren Klemmkurve liegt und dessen Radius $r_3 = 0,286H$ beträgt,
- das gerade Teilstück (12) der ersten Seitenkurve (10) sich vom Schnittpunkt des Teilkreis' (21) mit der Ordinate unter einem Winkel von $\beta = 180° + 42°$ in Richtung der der inneren Klemmkurve (7) erstreckt,
- der Verbindungskreisabschnitt (16), der den Teilkreis (21) mit der äußeren Klemmkurve (8) verbindet, einen Radius von $r_4 = 0,064H$ besitzt,
- der Verbindungskreisabschnitt (17), der die äußere Klemmkurve (8) mit dem ersten Kreissegment (14) verbindet, einen Radius von $r_5 = 0,048H$ besitzt,
- der Verbindungskreisabschnitt (18), der das zweite Kreissegment (15) mit der inneren Klemmkurve (7) verbindet, einen Radius von $r_6 = 0,079H$ besitzt,
- der Verbindungskreisabschnitt (19), der die innere Klemmkurve (7) mit dem geraden Teilstück (12) verbindet, einen Radius von $r_7 = 0,056H$ besitzt.

## Claims

1. Sprag for a sprag-type freewheel clutch which has a gap height H between an inner race and an outer race, the sprag having a profile composed of multiple profile sections and the sprag having at least the profile sections of an inner engagement curve, an outer engagement curve and a first and a second lateral curve, the entire outer engagement curve (8) and inner engagement curve (7) forming a component of the same logarithmic spiral (11), **characterized in that** the first lateral curve (9) is defined by a straight segment (12) with an adjoining, inwardly convex pitch circle (21) and that the second lateral curve (10) is composed of two adjoining, oppositely convex circular segments (14, 15).

2. Sprag according to Claim 1, **characterized in that** the angle covered by the outer engagement curve (8) and the inner engagement curve (7) is in each case 57° to 63°.

3. Sprag according to any one of the preceding claims, **characterized in that** the profile (5) is designed in such a way that the engagement curves (7, 8) and the lateral curves (9, 10) are in each case connected as profile sections (6) formed by connecting circular sections (16, 17, 18, 19).

4. Sprag according to any one of the preceding claims, **characterized in that** each profile section (6) tangentially adjoins the next profile section (6).

5. Sprag according to Claim 4, **characterized in that** the

   - the logarithmic spiral (11) is defined by the parameters

$$r(\varphi) = r_0 \exp(\varphi\cot(\frac{\pi}{2} - \alpha)) \text{ and } r_0 = \frac{H}{\cos\alpha}\left[1 + \exp(\pi\cot(\frac{\pi}{2} - \alpha))\right]^{-1},$$

where $r$ denotes the radius and $\alpha$ the engagement angle of the sprag, measured between two parallel planes,

- the abscissa is formed by the radius vector where $\varphi=0°$, the ordinate by the radius vector where $\varphi_0=90°$,
- the outer engagement curve (8) extends from $\varphi_1=82°$ to $\varphi_2=133°$,
- the inner engagement curve (7) extends from $\varphi_3=261°$ to $\varphi_4=320°$,
- the first circular segment (14) of the second lateral curve (10) lies on the circle with the center $m_1$ having the coordinates (-0.3 H ; +0.5 H) and the radius $r_1=0.7$ *H*,
- the pitch circle (21) lies on a circle with the center $m_2$ having the coordinates (-0.4 H ; +0.2 H) and the radius $r_2=0.3$ H,
- the second circular segment (15) of the second lateral curve (10) lies on a circle, the center $m_3$ of which is 0.9 H away from the center of the pitch circle (21) and 0.4 H from the ordinate, between the outer and inner engagement curves, and its radius is $r_3=0.3$ *H*,
- the straight segment (12) of the first lateral curve (10) extends from the intersection of the pitch circle (21) with the ordinate at an angle of $\beta=180°+42°$ in the direction of the inner engagement curve (7),
- the connecting circular section (16), which connects the pitch circle (21) to the outer engagement curve (8), has a radius of $r_4=0.1$ *H*,
- the connecting circular section (17), which connects the outer engagement curve (8) to the first circular segment (14), has a radius of $r_5=<0.1$ *H*,
- the connecting circular section (18), which connects the second circular segment (15) to the inner engagement curve (7), has a radius of $r_6<0.1$ *H*,
- the connecting circular section (19), which connects the inner engagement curve (7) to the straight segment (12), has a radius of $r_7<0.1$ *H*.

6. The sprag according to Claim 4, **characterized in that** the

- the logarithmic spiral (11) is defined by the parameters

$$r(\varphi) = r_0 \exp(\varphi \cot(\frac{\pi}{2} - \alpha)) \text{ and } r_0 = \frac{H}{\cos \alpha}\left[1 + \exp(\pi \cot(\frac{\pi}{2} - \alpha))\right]^{-1},$$

where r denotes the radius and $\alpha$ the engagement angle of the sprag, measured between two parallel planes,
- the abscissa is formed by the radius vector where $\varphi=0°$, the ordinate by the radius vector where $\varphi_0=90°$,
- the outer engagement curve (8) extends from $\varphi_1=80°$ to $\varphi_2=142°$,
- the inner engagement curve (7) extends from $\varphi_3=259°$ to $\varphi_4=320°$,
- the first circular segment (14) of the second lateral curve (10) lies on the circle with the center $m_1$ having the coordinates (-0.286 H ; +0.508 H) and the radius $r_1=0.715$ H,
- the pitch circle (21) lies on a circle with the center $m_2$ having the coordinates (-0.429 H ; +0.222 H) and the radius $r_2=0.335$ *H*,
- the second circular segment (15) of the second lateral curve (10) lies on a circle, the center $m_3$ of which is 0.929 H away from the center of the pitch circle (21) and 0.373 H from the ordinate and between the outer and inner engagement curves, and its radius is $r_3=0.286$ *H*,
- the straight segment (12) of the first lateral curve (10) extends from the intersection of the pitch circle (21) with the ordinate at an angle of $\beta=180°+42°$ in the direction of the inner engagement curve (7),
- the connecting circular section (16), which connects the pitch circle (21) to the outer engagement curve (8), has a radius of $r_4=0.064$ *H*,
- the connecting circular section (17), which connects the outer engagement curve (8) to the first circular segment (14), has a radius of $r_5=0.048$ *H*,
- the connecting circular section (18), which connects the second circular segment (15) to the inner engagement curve (7), has a radius of $r_6=0.079$ *H*,
- the connecting circular section (19), which connects the inner engagement curve (7) to the straight segment (12), has a radius of $r_7=0.056$ *H*.

**Revendications**

1. Corps de serrage pour une course libre de corps de serrage, lequel présente une hauteur d'interstice H entre une bague de roulement intérieure et une bague de roulement extérieure, comprenant un profil constitué de plusieurs sections de profil, le corps de serrage présentant au moins les sections de profil d'une courbe de serrage intérieure, d'une courbe de serrage extérieure, d'une première et d'une deuxième courbe latérale, la totalité de la courbe de serrage extérieure (8) et de la courbe de serrage intérieure (7) formant une section partielle de la même spirale logarithmique (11), **caractérisé en ce que** la première courbe latérale (9) est définie par une pièce partielle droite (12) avec un cercle partiel (21) courbé vers l'intérieur qui vient se rattacher à celle-ci et la deuxième courbe latérale (10) se compose de deux segments de cercle (14, 15) courbés en sens inverse qui sont rattachés l'un à l'autre.

2. Corps de serrage selon la revendication 1, **caractérisé en ce que** les angles balayés par la courbe de serrage extérieure (8) et la courbe de serrage intérieure (7) sont respectivement compris entre 57° et 63°.

3. Corps de serrage selon l'une des revendications précédentes, **caractérisé en ce que** le profil (5) est configuré de telle sorte que les courbes de serrage (7, 8) et les courbes latérales (9, 10) sont respectivement reliées par des sections de profil (6) réalisées sous la forme de sections de cercle de liaison (16, 17, 18, 19).

4. Corps de serrage selon l'une des revendications précédentes, **caractérisé en ce que** chaque section de profil (6) est juxtaposée tangentiellement à la section de profil suivante (6).

5. Corps de serrage selon la revendication 4, **caractérisé en ce que**

- la spirale logarithmique (11) est déterminée par les paramètres $r(\varphi) = r_0 \exp\left(\varphi \cot\left(\frac{\pi}{2} - \alpha\right)\right)$ et

$$r_0 = \frac{H}{\cos\alpha}\left[1 + \exp\left(\pi \cot\left(\frac{\pi}{2} - \alpha\right)\right)\right]^{-1},$$ r désignant le rayon et $\alpha$ l'angle de serrage du corps de serrage, mesuré entre deux plans parallèles,
- l'abscisse est formée par le vecteur du rayon avec $\varphi = 0°$, l'ordonnée par le vecteur du rayon avec $\varphi_0 = 90°$,
- la courbe de serrage extérieure (8) s'étend de $\varphi_1 = 82°$ à $\varphi_2 = 133°$,
- la courbe de serrage intérieure (7) s'étend de $\varphi_3 = 261°$ à $\varphi_4 = 320°$,
- le premier segment de cercle (14) de la deuxième courbe latérale (10) se trouve sur le cercle ayant pour centre $m_1$ de coordonnées (-0,3 H ; +0,5 H) et pour rayon $r_1 = 0,7$ H,
- le cercle partiel (21) se trouve sur un cercle ayant pour centre $m_2$ de coordonnées (-0,4 H ; +0,2 H) et pour rayon $r_2 = 0,3$ H,
- le deuxième segment de cercle (15) de la deuxième courbe latérale (10) se trouve sur un cercle dont le centre $m_3$ est éloigné de 0,9 H du centre du cercle partiel (21) et de 0,4 H de l'ordonnée, qui se trouve entre les courbes de serrage extérieure et intérieure et qui a pour rayon $r_3 = 0,3$ H,
- la pièce partielle droite (12) de la première courbe latérale (10) s'étend du point d'intersection du cercle partiel (21) à l'ordonnée sous un angle de $\beta = 180° + 42°$ en direction de celui de la courbe de serrage intérieure (7),
- la section de cercle de liaison (16) qui relie le cercle partiel (21) avec la courbe de serrage extérieure (8) possède un rayon $r_4 = < 0,1$ H,
- la section de cercle de liaison (17) qui relie la courbe de serrage extérieure (8) avec le premier segment de cercle (14) possède un rayon $r_5 = < 0,1$ H,
- la section de cercle de liaison (18) qui relie le deuxième segment de cercle (15) avec la courbe de serrage intérieure (7) possède un rayon $r_6 < 0,1$ H,
- la section de cercle de liaison (19) qui relie la courbe de serrage intérieure (7) avec la pièce partielle droite (12) possède un rayon $r_7 < 0,1$ H.

6. Corps de serrage selon la revendication 4, **caractérisé en ce que**

- la spirale logarithmique (11) est déterminée par les paramètres $r(\varphi) = r_0 \exp\left(\varphi \cot\left(\frac{\pi}{2} - \alpha\right)\right)$ et

$$r_0 = \frac{H}{\cos\alpha}\left[1 + \exp\left(\pi \cot\left(\frac{\pi}{2} - \alpha\right)\right)\right]^{-1},$$ r désignant le rayon et $\alpha$ l'angle de serrage du corps de serrage, mesuré entre deux plans parallèles,
- l'abscisse est formée par le vecteur du rayon avec $\varphi = 0°$, l'ordonnée par le vecteur du rayon avec $\varphi_0 = 90°$,
- la courbe de serrage extérieure (8) s'étend de $\varphi_1 = 80°$ à $\varphi_2 = 142°$,
- la courbe de serrage intérieure (7) s'étend de $\varphi_3 = 259°$ à $\varphi_4 = 320°$,
- le premier segment de cercle (14) de la deuxième courbe latérale (10) se trouve sur le cercle ayant pour centre

$m_1$ de coordonnées (-0,286 H ; +0,508 H) et pour rayon $r_1$ = 0,715 H,
- le cercle partiel (21) se trouve sur un cercle ayant pour centre $m_2$ de coordonnées (-0,429 H ; +0,222 H) et pour rayon $r_2$ = 0,335 H,
- le deuxième segment de cercle (15) de la deuxième courbe latérale (10) se trouve sur un cercle dont le centre $m_3$ est éloigné de 0,929 H du centre du cercle partiel (21) et de 0,373 H de l'ordonnée, qui se trouve entre les courbes de serrage extérieure et intérieure et qui a pour rayon $r_3$ = 0,286 H,
- la pièce partielle droite (12) de la première courbe latérale (10) s'étend du point d'intersection du cercle partiel (21) à l'ordonnée sous un angle de $\beta$ = 180° + 42° en direction de celui de la courbe de serrage intérieure (7),
- la section de cercle de liaison (16) qui relie le cercle partiel (21) avec la courbe de serrage extérieure (8) possède un rayon $r_4$ = 0,064 H,
- la section de cercle de liaison (17) qui relie la courbe de serrage extérieure (8) avec le premier segment de cercle (14) possède un rayon $r_5$ = 0,048 H,
- la section de cercle de liaison (18) qui relie le deuxième segment de cercle (15) avec la courbe de serrage intérieure (7) possède un rayon $r_6$ = 0,079 H,
- la section de cercle de liaison (19) qui relie la courbe de serrage intérieure (7) avec la pièce partielle droite (12) possède un rayon $r_7$ = 0,056 H.

# Fig. 1
## ( PRIOR ART )

EP 1 838 972 B1

Fig. 3

Fig. 2

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040003976 A1
- US 2824635 A
- DE 1450158